# EUROPEAN PATENT SPECIFICATION

(11) **EP 2 660 691 B1**
(45) Date of publication and mention of the grant of the patent: **11.07.2018**
(21) Application number: 12166812.3
(22) Date of filing: 04.05.2012
(51) Int. Cl.: G06F 3/044, G06F 3/041, G06F 1/32

(54) **Electronic device including touch-sensitive display and method of detecting touches**
Elektronische Vorrichtung mit berührungsempfindlicher Anzeige und Verfahren zum Erkennen von Berührungen
Dispositif électronique incluant un affichage sensible au toucher et son procédé de détection des touches

(43) Date of publication of application: 06.11.2013
(73) Proprietor: BlackBerry Limited, Waterloo, ON N2K 0A7 (CA)
(72) Inventor: Singh, Amit Pal, Waterloo, Ontario N2L 3W8 (CA); Dolson, John Edward, Ottawa, Ontario K2K 3K1 (CA)
(74) Representative: Fennell, Gareth Charles

(56) References cited:
- WO-A1-2011/137200
- US-A1- 2007 247 443
- US-A1- 2008 246 496
- US-A1- 2010 271 330
- US-A1- 2011 007 021
- US-A1- 2011 157 068
- US-A1- 2011 279 406

## Description

### FIELD OF TECHNOLOGY

The present disclosure relates to electronic devices including, but not limited to, portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed. Improvements in electronic devices with touch-sensitive displays are desirable.

US 2011/0007021 describes a sensor array with improved capacitive touch and hover sensing. An AC ground shield positioned behind the sensor array and stimulated with signals of the same waveform as the signals driving the sensor array may concentrate the electric field extending from the sensor array and enhance hover sensing capability. The hover position and/or height of an object that is nearby, but not directly above, a touch surface of the sensor array, e.g., in the border area at the end of a touch screen, may be determined using capacitive measurements of sensors near the end of the sensor array by fitting the measurements to a model. Other improvements relate to the joint operation of touch and hover sensing, such as determining when and how to perform touch sensing, hover sensing, both touch and hover sensing, or neither.

### SUMMARY

Aspects of the present invention are defined in the accompanying independent claims. Preferred embodiments are defined in the dependent claims.

### BRIEF DESCRIPTION OF THE DRAWINGS

FIG. 1 is a block diagram of a portable electronic device in accordance with the disclosure.
FIG. 2 is a front view of one example of an electronic device in accordance with the disclosure.
FIG. 3 is a partial cross section of one example of a touch-sensitive display in accordance with the disclosure.
FIG. 4 is a diagram illustrating a drive electrode, a sense electrode, and an additional electrode in accordance with the disclosure.
FIG. 5 is a flowchart illustrating an example of a method of detecting touches on a touch-sensitive display in accordance with the disclosure.

### DETAILED DESCRIPTION

The following describes an electronic device and a method that includes detecting touches by mutual-capacitance touch sensing utilizing first electrodes and second electrodes of a touch-sensitive display, and detecting touches by self-capacitance touch sensing utilizing the second electrodes and third electrodes of the touch-sensitive display, wherein the first electrodes are different from the third electrodes.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may also be a portable electronic device without wireless communication capabilities, such as a handheld electronic game device, digital photograph album, digital camera, media player, e-book reader, and so forth.

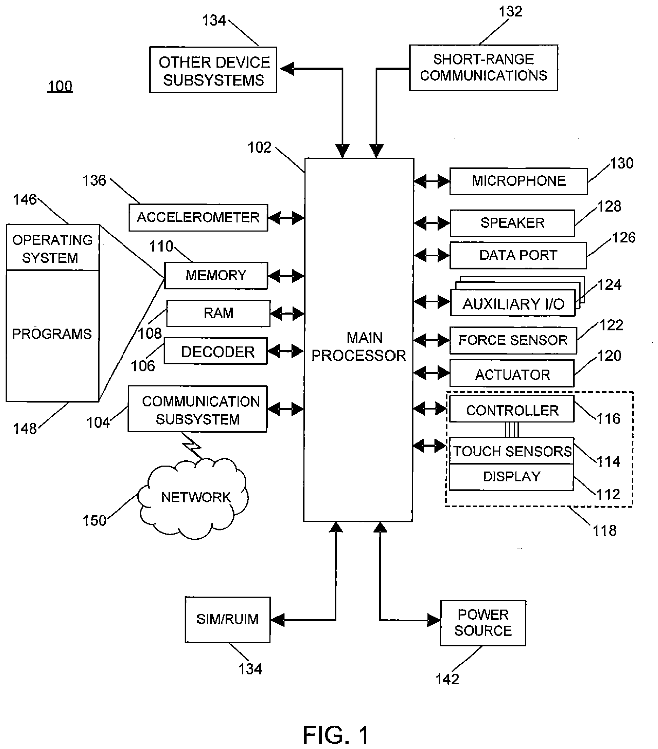

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to a touch controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

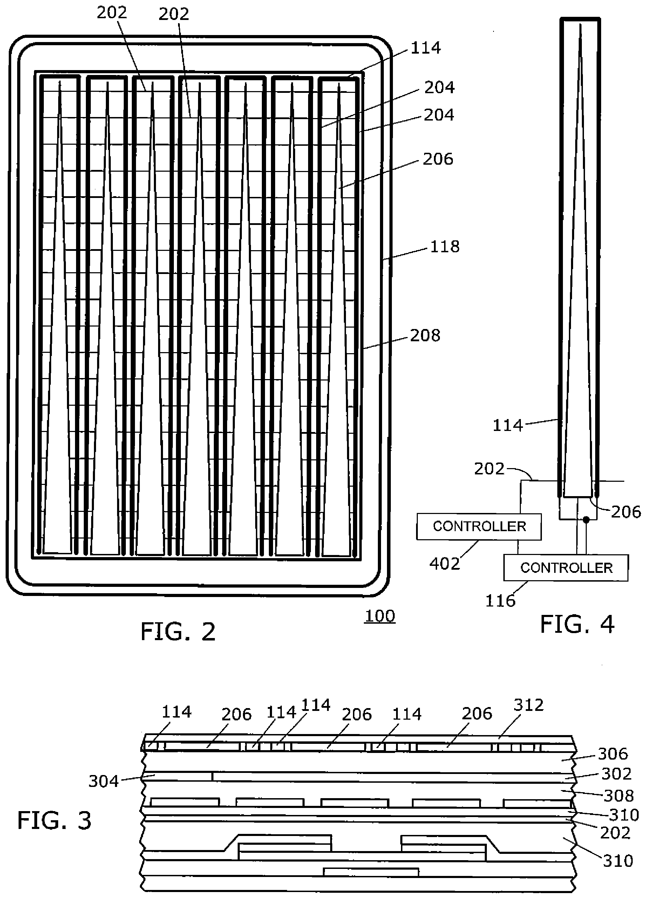

A front view of an example of the electronic device 100 is shown in FIG. 2. The electronic device 100 includes the touch-sensitive display 118. The touch-sensitive display 118 may be a capacitive touch-sensitive display that includes capacitive touch sensors. The touch sensors include, for example, drive electrodes 202, also referred to as scanning electrodes. The drive electrodes 202 in this example are the common electrodes utilized for the display 112 and are coupled to a display controller that is part of the display 112. Thus, the drive electrodes 202 also function as common electrodes to display information on the display 112. The touch sensors also include the sense electrodes 114. Each sense electrode 114 is generally U-shaped, including two parallel fingers 204. The ends of the parallel fingers 204 are coupled to the touch controller 116.

The touch-sensitive display 118 also includes additional electrodes 206. In this example, the additional electrodes 206 are disposed between the sense electrodes 114 such that each additional electrode 206 is disposed between the fingers of a respective one of the sense electrodes 114. The additional electrodes 206 are shaped such that the additional electrodes 206 are wider at the end at which the additional electrodes are coupled to the touch controller 116 than at the opposing end, to facilitate detection of touch location along the length of the additional electrodes 206. The additional electrodes 206 are solid electrodes in this example and are shown in outline for the purpose of illustration. Other suitable electrode shapes may be utilized.

The touch-sensitive display 118 includes a display area in which information may be displayed, and a non-display area extending around the periphery of the display area. The display area may include the area inside the rectangle 208 in FIG. 2 and the non-display area may include a surrounding area. Information is typically not displayed in the non-display area, which area is utilized to accommodate, for example, electronic traces or electrical connections, adhesives or other sealants, and/or protective coatings around the edges of the display area. The electrodes 202, the electrodes 204, and the electrodes 206 may be disposed in the non-display area or may extend from the display area into the non-display area.

The drive electrodes 202, the sense electrodes 114, and the additional electrodes 206 may comprise any suitable material, such as indium tin oxide (ITO). The drive electrodes 202, the sense electrodes 114, and the additional electrodes 206 are not visible to the naked eye when viewing the electronic device 100 in a normal operating manner, but are shown in the FIG. 2 through FIG. 4 for the purpose of illustration.

A partial cross section of the touch-sensitive display 118 is shown in FIG. 3. The display 112 may include, for example, a thin-film transistor (TFT) structure and a color filter 302 and black matrix 304 disposed on a substrate 306. The common electrodes of the display 112 are utilized as the drive electrodes 202 of the touch-sensitive display 118. In this example, the drive electrodes 202 are disposed between dielectric layers 310 of the TFT structure and are disposed under the liquid crystal 308.

The sense electrodes 114 and the additional electrodes 206 are disposed on the substrate 306, for example, by patterning a shield of ITO disposed on the substrate 306. Thus, the color filter 302 and black matrix 304 are disposed on one side of the substrate 306, and the sense electrodes 114 and additional electrodes are disposed on the opposite side of the substrate 306. An outer polarizer 312 is disposed on the sense electrodes 114 and additional electrodes. The sense electrodes 114 and the additional electrodes 206 are disposed on the same layer in the touch-sensitive display 118.

A diagram illustrating a drive electrode 202, a sense electrode 114, and an additional electrode 206 is shown in FIG. 4. The drive electrode 202 is coupled to a display controller 402. The sense electrode 114 and the additional electrode 206 are coupled to the touch controller 116. The drive electrode 202 may be coupled to the display controller 402 by, for example, a flex connector. The sense electrode 114 and the additional electrode 206 may be coupled to the touch controller 116 by a flex connector such that the sense electrode 114 and the additional electrode 206 are not directly electrically connected. The sense electrode 114 and the additional electrode 206 may be coupled to the touch controller 116 by the flex connector utilized to couple the drive electrode 202 to the display controller 402 or by another flex connector. The display controller 402 and the touch controller 116 may be coupled together to communicate and coordinate driving of the drive electrodes 202 while sensing with the sense electrodes 114.

The drive electrodes 202 and the sense electrodes 114 may be utilized to detect a touch by mutual-capacitance touch sensing. To detect a touch, drive electrodes 202 are driven by the display controller 402 such that pulses of signal are carried by the drive electrodes 202. The signal may be current or applied voltage. The sense electrodes 114 are utilized to detect changes in the signal at the nodes, which are the locations at which the fingers 204 of the sense electrodes 114 cross over the drive electrodes 202. To determine a touch location, the touch-sensitive display 118 is scanned by driving the drive electrodes 202 while signals from sense electrodes 114 are received at the touch controller 116. Each scan of the touch-sensitive display 118 includes multiple frames. In each frame, a drive electrode 202 is driven utilizing multiple pulses, while receiving signals from a sense electrode 114. Each drive electrode 204 may be driven in multiple frames while sensing utilizing each of the sense electrodes 204. The additional electrodes 206 are not utilized during mutual-capacitance touch sensing.

To operate at reduced power, for example, when the electronic device 100 is locked, or when a touch is not detected in a threshold period of time, the display 112, including the display controller 402, may be turned off or may operate in a reduced power condition. To detect a touch when the display 112 is off, and the display controller 402 is not driving the drive electrodes 202, the sense electrodes 114 and the additional electrodes 206 are utilized. The touch is detected by self capacitance touch sensing. A touch on the touch-sensitive display 118 alters the electrical charge on the sense electrodes 114 and additional electrodes 206 near the touch. The change in electrical charge on the sense electrodes 114 and on the additional electrodes 206 is detected at the touch controller 116.

The area of contact or area of the touch and proximity of the touch location to the electrode affect the change in the electrical charge. A gesture may be detected on the touch-sensitive display 118. For example, a change in location of a touch that follows a path generally along a drive electrode 202 may be detected by the sense electrodes 114. A change in location of a touch that follows a path generally along a sense electrode 114 is not detected by the sense electrode 114 when detecting touches by self-capacitance touch sensing. The change in location is detected by the nearest additional electrodes 206 because the width of the electrode 206 is greater at one end than the other. Thus, the change in electrical charge along the electrode 206 is greater when the touch is near the wide end of the electrode 206 than when the touch is near the opposite end of the electrode 206. This change in electrical charge is detected by the touch controller 116, and a gesture in any direction on the touch-sensitive display 118 may be detected.

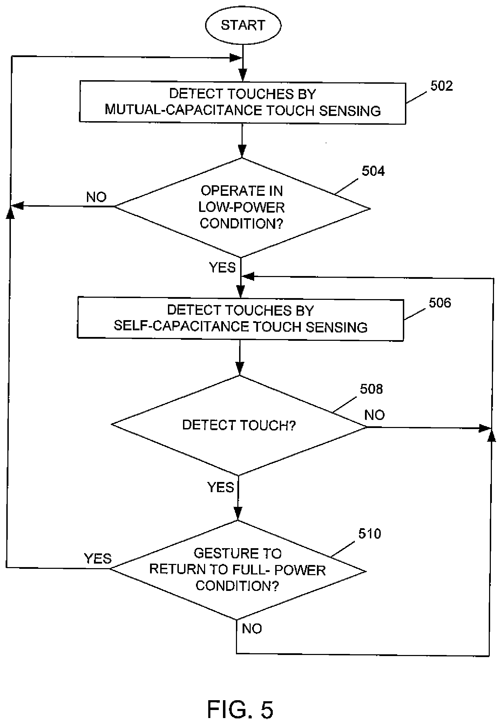

A flowchart illustrating an example of a method of detecting touches on the touch-sensitive display 118 is shown in FIG. 5. The method may be carried out by software executed, for example, by the processor 102 and the touch controller 116. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable storage medium, such as a non-transitory computer-readable storage medium, which medium is tangible.

During operation of the portable electronic device 100, touches are detected 502 by mutual-capacitance touch sensing by driving the drive electrodes 202 while signals from the sense electrodes 114 are received at the touch controller 116.

When the device 100 enters a low-power condition 504, the process continues at 506, and touches are detected 506 by self-capacitance touch sensing. The low-power condition or reduced power condition, which may be referred to as a "sleep" condition or state, is a condition in which no information is typically displayed on the touch-sensitive display. During a low-power condition, processes with the electronic device 100 may be discontinued or operated at a slower speed and one or more hardware components may be powered-down or operated at a slower speed to conserve power or provide other advantages. The electronic device 100 may operate in the low-power condition when the processor 102 determines that no touch is detected on the touch-sensitive display 118 for a period of time that meets a threshold, when no input is generally detected by the electronic device 100, when the device is locked by selection of a button or receipt of a gesture on the touch-sensitive display 118, or when the device is placed in a holster or covered by a cover, to name a few examples. An indication or command to operate in the low-power condition may be sent from the processor 102 and received at the touch controller 116 and the display controller 402. During self-capacitance touch sensing, the display 112, including the display controller 402, may be turned off or may "sleep". The drive electrodes 202 are not utilized for touch sensing and the controller 402 is not utilized to drive the drive electrodes 202.

When a touch is detected 508, the touch data is compared to stored touch data to determine when the touch is a gesture to operate in a full-power condition. When the touch is a gesture to return to the full-power condition, the touch controller 102 may send an indication or a command to the processor 102 and/or the display controller 402, and touches are again detected 502 by mutual-capacitance touch sensing. The touch may be a gesture to return to the full-power condition, for example, to unlock the electronic device 100, to engage full operation of the electronic device 100, or to wake up the electronic device 100.

A touch-sensitive display includes first electrodes and second electrodes arranged and constructed to detect touches by mutual-capacitance touch sensing, and third electrodes and the second electrodes arranged and constructed to detect touches by self-capacitance touch sensing, wherein the first electrodes are different from the third electrodes.

A method includes detecting touches by mutual-capacitance touch sensing utilizing first electrodes and second electrodes of a touch-sensitive display and detecting touches by self-capacitance touch sensing utilizing the second electrodes and third electrodes of the touch-sensitive display, wherein the first electrodes are different from the third electrodes.

Utilizing the additional electrodes 206 during self-capacitance touch sensing, a gesture, such as a sliding gesture along one of the sense electrodes 114, may be detected. The additional electrodes 206 facilitate determination of gesture direction during self-capacitance touch sensing. Thus, gesture direction may be determined without utilizing drive electrodes. In an electronic device 100 that includes a touch sensors in the display, such as the in-cell touch-sensitive display 118, touches may be detected and gesture direction determined when the display controller is off. Thus, gesture direction may be detected when the electronic device 100 is in a low-power or reduced power condition, and the display, including the display controller, is not utilized. Power utilized by the display controller, also referred to as the display driver, may be very high compared to the touch controller. Thus, turning off the display controller reduces power consumption.

The described embodiments are to be considered only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A touch-sensitive display (118) comprising:
first electrodes (202) and second electrodes (114) arranged and constructed to detect touches by mutual-capacitance touch sensing;
third electrodes (206) and the second electrodes (114) arranged and constructed to detect touches by self-capacitance touch sensing;
wherein the first electrodes are different from the third electrodes,
wherein the first electrodes are drive electrodes and the second electrodes are sense electrodes, and
wherein the third electrodes are disposed between fingers of the second electrodes such that one of the third electrodes is disposed between the fingers of one of the second electrodes.

2. The touch-sensitive display according to claim 1, wherein the third electrodes are not utilized during mutual-capacitance touch sensing.

3. The touch-sensitive display according to claim 1, wherein the first electrodes are not utilized during self-capacitance touch sensing.

4. The touch-sensitive display according to claim 1, wherein the third electrodes are shaped to detect location of a touch along a length of the electrode.

5. The touch-sensitive display according to claim 1, wherein the third electrodes are wider at the first end than the second end.

6. The touch-sensitive display according to claim 1, wherein the first electrodes comprise common electrodes utilized to display information on the touch-sensitive display.

7. The touch-sensitive display according to claim 1, comprising a display controller (402) coupled to the first electrodes to drive the first electrodes when the first electrodes are utilized to detect touches.

8. The touch-sensitive display according to claim 1, comprising a touch controller coupled to the second electrodes to sense a touch when the second electrodes are utilized to detect touches by mutual-capacitance touch sensing.

9. The touch-sensitive display according to claim 1, comprising a touch controller coupled to the second electrodes and the third electrodes to sense a touch when the second electrodes are utilized to detect touches by mutual-capacitance touch sensing and to control the second and third electrodes during self-capacitance touch sensing.

10. The touch-sensitive display according to claim 1, comprising:
a display controller (402) coupled to the first electrodes to drive the first electrodes when the first electrodes are utilized to detect touches;
a touch controller coupled to the second electrodes and the third electrodes to sense a touch when the second electrodes are utilized to detect touches by mutual-capacitance touch sensing and to control the second and third electrodes when the second and third electrodes are utilized to detect touches by self-capacitance touch sensing.

11. A portable electronic device comprising the touch-sensitive display according to any one of claims 1 to 10.

12. A method comprising:
detecting touches by mutual-capacitance touch sensing utilizing first electrodes (202) and second electrodes (114) of a touch-sensitive display (118);
detecting touches by self-capacitance touch sensing utilizing the second electrodes (114) and third electrodes (206) of the touch-sensitive display ;
wherein the first electrodes are different from the third electrodes,
wherein the first electrodes are drive electrodes and the second electrodes are sense electrodes, and
wherein the third electrodes are disposed between fingers of the second electrodes such that one of the third electrodes is disposed between the fingers of one of the second electrodes.

13. The method according to claim 12, wherein touches are detected by self-capacitance touch sensing when the touch-sensitive display is operating in a low-power condition.

14. A computer-readable storage medium having computer-readable code stored thereon, the computer-readable code executable by at least one processor (102) of the portable electronic device (100) to perform the method of claim 12 or 13.

## Patentansprüche

1. Berührungsempfindliche Anzeige (118), umfassend:
erste Elektroden (202) und zweite Elektroden (114), die angeordnet und ausgelegt sind, um Berührungen durch Berührungserfassung mittels Gegenkapazität zu erkennen;
dritte Elektroden (206) und die zweiten Elektroden (114), die angeordnet und ausgelegt sind, um Berührungen durch Berührungserfassung mittels Eigenkapazität zu erkennen;
wobei die ersten Elektroden anders als die dritten Elektroden sind,
wobei die ersten Elektroden Ansteuerelektroden sind und die zweiten Elektroden Sensorelektroden sind, und
wobei die dritten Elektroden zwischen Fingern der zweiten Elektroden angeordnet sind, so dass eine der dritten Elektroden zwischen den Fingern einer der zweiten Elektroden angeordnet ist.

2. Berührungsempfindliche Anzeige nach Anspruch 1, wobei die dritten Elektroden während der Berührungserfassung mittels Gegenkapazität nicht verwendet werden.

3. Berührungsempfindliche Anzeige nach Anspruch 1, wobei die ersten Elektroden während der Berührungserfassung mittels Eigenkapazität nicht verwendet werden.

4. Berührungsempfindliche Anzeige nach Anspruch 1, wobei die dritten Elektroden gestaltet sind, um die Stelle einer Berührung entlang einer Länge der Elektrode zu erkennen.

5. Berührungsempfindliche Anzeige nach Anspruch 1, wobei die dritten Elektroden am ersten Ende breiter als am zweiten Ende sind.

6. Berührungsempfindliche Anzeige nach Anspruch 1, wobei die ersten Elektroden gemeinsame Elektroden umfassen, die verwendet werden, um Informationen an der berührungsempfindlichen Anzeige anzuzeigen.

7. Berührungsempfindliche Anzeige nach Anspruch 1, umfassend einen Anzeige-Controller (402), der mit den ersten Elektroden gekoppelt ist, um die ersten Elektroden anzusteuern, wenn die ersten Elektroden verwendet werden, um Berührungen zu erkennen.

8. Berührungsempfindliche Anzeige nach Anspruch 1, umfassend einen Berührungs-Controller, der mit den zweiten Elektroden gekoppelt ist, um eine Berührung zu erfassen, wenn die zweiten Elektroden verwendet werden, um Berührungen durch Berührungserfassung mittels Gegenkapazität zu erkennen.

9. Berührungsempfindliche Anzeige nach Anspruch 1, umfassend einen Berührungs-Controller, der mit den zweiten Elektroden und den dritten Elektroden gekoppelt ist, um eine Berührung zu erfassen, wenn die zweiten Elektroden verwendet werden, um Berührungen durch Berührungserfassung mittels Gegenkapazität zu erkennen, und um die zweiten und dritten Elektroden während der Berührungserfassung mittels Eigenkapazität zu steuern.

10. Berührungsempfindliche Anzeige nach Anspruch 1, umfassend:
einen Anzeige-Controller (402), der mit den ersten Elektroden gekoppelt ist, um die ersten Elektroden anzusteuern, wenn die ersten Elektroden verwendet werden, um Berührungen zu erkennen;
einen Berührungs-Controller, der mit den zweiten Elektroden und den dritten Elektroden gekoppelt ist, um eine Berührung zu erfassen, wenn die zweiten Elektroden verwendet werden, um Berührungen durch Berührungserfassung mittels Gegenkapazität zu erkennen, und um die zweiten und dritten Elektroden zu steuern, wenn die zweiten und dritten Elektroden verwendet werden, um Berührungen durch Berührungserfassung mittels Eigenkapazität zu erkennen.

11. Tragbare elektronische Vorrichtung, umfassend die berührungsempfindliche Anzeige nach einem der Ansprüche 1 bis 10.

12. Verfahren, umfassend folgende Schritte:
Erkennen von Berührungen durch Berührungserfassung mittels Gegenkapazität unter Verwendung der ersten Elektroden (202) und der zweiten Elektroden (114) einer berührungsempfindlichen Anzeige (118);
Erkennen von Berührungen durch Berührungserfassung mittels Eigenkapazität unter Verwendung der zweiten Elektroden (114) und der dritten Elektroden (206) der berührungsempfindlichen Anzeige;
wobei die ersten Elektroden anders als die dritten Elektroden sind,
wobei die ersten Elektroden Ansteuerelektroden sind und die zweiten Elektroden Sensorelektroden sind, und
wobei die dritten Elektroden zwischen Fingern der zweiten Elektroden angeordnet sind, so dass eine der dritten Elektroden zwischen den Fingern einer der zweiten Elektroden angeordnet ist.

13. Verfahren nach Anspruch 12, wobei Berührungen durch Berührungserfassung mittels Eigenkapazität erkannt werden, wenn die berührungsempfindliche Anzeige in einem Energiesparzustand betätigt wird.

14. Computerlesbares Speichermedium, auf dem computerlesbarer Code gespeichert ist, wobei der computerlesbare Code durch mindestens einen Prozessor (102) der tragbaren elektronischen Vorrichtung (100) ausführbar ist, um das Verfahren nach Anspruch 12 oder 13 auszuführen.

## Revendications

1. Dispositif d'affichage tactile (118) comprenant :
des premières électrodes (202) et des deuxièmes électrodes (114) agencées et construites pour détecter des touchers par détection tactile à capacité mutuelle ;
des troisièmes électrodes (206) et les deuxièmes électrodes (114) agencées et construites pour détecter des touchers par détection tactile à capacité propre ;
dans lequel les premières électrodes sont différentes des troisièmes électrodes,
dans lequel les premières électrodes sont des électrodes d'attaque et les deuxièmes électrodes sont des électrodes de détection, et
dans lequel les troisièmes électrodes sont disposées entre des doigts des deuxièmes électrodes de sorte que l'une des troisièmes électrodes soit disposée entre les doigts de l'une des deuxièmes électrodes.

2. Dispositif d'affichage tactile selon la revendication 1, dans lequel les troisièmes électrodes ne sont pas utilisées lors d'une détection tactile à capacité mutuelle.

3. Dispositif d'affichage tactile selon la revendication 1, dans lequel les premières électrodes ne sont pas utilisées lors d'une détection tactile à capacité propre.

4. Dispositif d'affichage tactile selon la revendication 1, dans lequel les troisièmes électrodes sont conformées pour détecter la position d'un toucher sur une longueur de l'électrode.

5. Dispositif d'affichage tactile selon la revendication 1, dans lequel les troisièmes électrodes sont plus larges au niveau de la première extrémité qu'au niveau de la deuxième extrémité.

6. Dispositif d'affichage tactile selon la revendication 1, dans lequel les premières électrodes comprennent des électrodes communes utilisées pour afficher des informations sur le dispositif d'affichage tactile.

7. Dispositif d'affichage tactile selon la revendication 1, comprenant un dispositif de commande de dispositif d'affichage (402) couplé aux premières électrodes pour attaquer les premières électrodes lorsque les premières électrodes sont utilisées pour détecter des touchers.

8. Dispositif d'affichage tactile selon la revendication 1, comprenant un dispositif de commande tactile couplé aux deuxièmes électrodes pour détecter un toucher lorsque les deuxièmes électrodes sont utilisées pour détecter des touchers par détection tactile à capacité mutuelle.

9. Dispositif d'affichage tactile selon la revendication 1, comprenant un dispositif de commande tactile couplé aux deuxièmes électrodes et aux troisièmes électrodes pour détecter un toucher lorsque les deuxièmes électrodes sont utilisées pour détecter des touchers par détection tactile à capacité mutuelle et pour commander les deuxièmes et troisièmes électrodes lors d'une détection tactile à capacité propre.

10. Dispositif d'affichage tactile selon la revendication 1, comprenant :
un dispositif de commande de dispositif d'affichage (402) couplé aux premières électrodes pour attaquer les premières électrodes lorsque les premières électrodes sont utilisées pour détecter des touchers ;
un dispositif de commande tactile couplé aux deuxièmes électrodes et aux troisièmes électrodes pour détecter un toucher lorsque les deuxièmes électrodes sont utilisées pour détecter des touchers par détection tactile à capacité mutuelle et pour commander les deuxièmes et troisièmes électrodes lorsque les deuxièmes et troisièmes électrodes sont utilisées pour détecter des touchers par détection tactile à capacité propre.

11. Dispositif électronique portable comprenant le dispositif d'affichage tactile selon l'une quelconque des revendications 1 à 10.

12. Procédé consistant à :
détecter des touchers par détection tactile à capacité mutuelle en utilisant des premières électrodes (202) et des deuxièmes électrodes (114) d'un dispositif d'affichage tactile (118) ;
détecter des touchers par détection tactile à capacité propre en utilisant les deuxièmes électrodes (114) et des troisièmes électrodes (206) du dispositif d'affichage tactile ;
dans lequel les premières électrodes sont différentes des troisièmes électrodes,
dans lequel les premières électrodes sont des électrodes d'attaque et les deuxièmes électrodes sont des électrodes de détection, et
dans lequel les troisièmes électrodes sont disposées entre des doigts des deuxièmes électrodes de sorte que l'une des troisièmes électrodes soit disposée entre les doigts de l'une des deuxièmes électrodes.

13. Procédé selon la revendication 12, dans lequel des touchers sont détectés par détection tactile à capacité propre lorsque le dispositif d'affichage tactile fonctionne dans une condition de faible puissance.

14. Support de stockage lisible par ordinateur ayant un code lisible par ordinateur stocké sur celui-ci, le code lisible par ordinateur pouvant être exécuté par au moins un processeur (102) du dispositif électronique portable (100) pour exécuter le procédé de la revendication 12 ou 13.
